# EUROPEAN PATENT SPECIFICATION

(11) **EP 2 340 978 B1**
(45) Date of publication and mention of the grant of the patent: **25.01.2017**
(21) Application number: 10196168.8
(22) Date of filing: 21.12.2010
(51) Int. Cl.: B62B 3/00, B62B 5/00

(54) **A system for the mounting of shelves and the reduction of noise**
System zur Montage von Regalen und Geräuschverminderung
Système de montage d'étagères et réduction du bruit

(30) Priority: 23.12.2009 DK 200970300
(43) Date of publication of application: 06.07.2011
(73) Proprietor: Container Centralen A/S, 5250 Odense, SV (DK)
(72) Inventor: Mogensen, Erling, 5500, Middelfart (DK); Holmgaard, Berno, 5610, Assens (DK)
(74) Representative: Zacco Denmark A/S

(56) References cited:
- DE-A1- 3 606 919
- GB-A- 2 454 004
- US-A- 6 135 706
- US-A1- 2009 020 661
- US-B2- 6 814 362

## Description

### Background

The present invention relates to a load carrier with shelves mounted on pillars and a holder for the reduction of noise from a shelf mounted on the pillars of the load carrier by means of holders, which holder is introduced into complementary slots in the pillars and is configured with a notch having a carrier face by which the holder is able to engage with the slot in such a manner that the holder has bearing on the pillar. The load carrier is for the reduction of noise from a shelf mounted on the pillars of a load carrier by means of holders. The holder is introduced into complementary slots in the pillars and is configured with a notch having a carrier face by which the holder is able to engage with the slot in such a manner that the holder has bearing on the pillar. The present invention further relates to a load carrier with shelves mounted on pillars. The pillar comprises one or more notches, wherein the individual shelves can be mounted by means of a holder with a carrier face.

Load carriers, such as trolleys for handling goods, plants, products, etc., are widely used. Often, such load carriers have a set of front wheels and a set of rear wheels mounted on the bottom face of a bottom frame with vertical pillars that extend upwards from the corners of the bottom frame. One or more shelves is/are arranged for supporting the load of goods loaded onto the trolley. The shelves are connected to each of the vertical pillars by means of hooks arranged at the corners of the shelves. The hooks are configured to engage with slots arranged at suitable intervals in the longitudinal direction of the pillars, and the shelves can easily be dismounted, moved and/or removed in response to the situation of use. The fact that the shelves are removable also means that load carriers take up less space during return transport in empty state.

Within the field of working environment issues, the legislation is continuously tightened. In the field of handling machinery, this means ia that strengthened requirements are made in respect of perceived noisiness. Noise is a frequently occurring problem within handling of machinery, and in particular trolleys that are used in connection with deliveries to supermarkets constitute a problem. This is due to the fact that deliveries often arrive late at night or early in the morning, and that the supermarkets are often situated in dense urban areas.

Noise reduction systems according to the prior art are associated with the drawback that the stability of the loaded goods is reduced. That may occur eg when a resilient material is used to reduce noise, and the goods loaded onto the trolley are placed directly on top of or in connection with that material. In such cases, the loaded goods may have a propensity to bob up and down due to the resilient properties of the used material.

US patent No. 6 814 362 describes a system with a cart for transporting agricultural items such as potted plants. The cart comprises a shelf frame on which a shelf element is mounted by means of an adhesive, resiliently deformable material between the carrier face and the supporting element.

DE3606919A1 describes a wheel frame of the loading frame with a vertically arranged opening at each of its corners for receiving two lattice walls. Inserted into the openings are bushings which have noise-damping properties.

US2009020661A1 is directed to transport devices, and particularly to transport devices that carry fragile materials, and even more particularly to a glass transportation cart that is used to transport glass panes, assembled glass units, IGU's, framed glass, glass window frames, etc. The glass transportation cart of the present invention includes an arrangement and method for holding a cushioning media on the glass transportation cart, which arrangement and method for holding does not require the use of traditional fasteners or adhesives, thereby protecting the glass panes, glass frames, etc. glass panes, assembled glass units, IGUs, framed glass, etc. in the glass transportation cart from accidental contact with hard substances and subsequent breakage. The holding arrangement and method for holding also can be designed to allow for easy replacement of the cushioning media.

GB 2 454 004 describes that the absorption of vibrations takes place by means of a layer placed between castors and the frame situated above. Such arrangement may to some degree reduce vibrations and ensuingly the formation of noise; but nuisances during maneuvering increase with increasing softness of the interposed layers. Therefore, in practice, the material must be comparatively rigid, which means that the ability to abate noise formation is reduced.

Thus, a need has arisen for remedying the problems associated with the prior art. When load carriers are used on uneven surfaces, in particular the removable shelves generate noise of a considerable magnitude. This is the case in particular when the trolleys are moved with empty shelves. Empty shelves increase noise due ia to the way in which they are mounted to the load carrier.

### Object and brief description of the invention

The present invention relates to reduction of noise from shelves that are mounted, preferably, by means of holders that are introduced into complementary slots. This is achieved by means of a holder as set forth above which is characterized in that the holder comprises a resilient element arranged in the notch to the effect that: the resilient element causes the carrier face to not enter into contact with the pillar when the shelf is not loaded with goods; and that the resilient element is compressed when a load of goods is loaded onto the shelf and hereby a direct contact is created between the carrier face of the notch and the pillar.

The holder is configured as a profile with a cavity; that the resilient element is arranged inside the cavity of the profile; that the resilient element fills a part of the notch of the holder; and that the resilient element, in the loaded state of the shelf, is compressed in such a way that the carrier face is caused to come into contact with the pillar; and that, consequently, the holder has a bearing on the carrier face. An advantage of this is that the wear on the resilient material is reduced.

According to a further embodiment of the holder, the resilient element is a resilient material which is deformed when the shelf is loaded with goods. Hereby a simple construction ensues.

According to yet an embodiment of the holder, the resilient material is a material that resumes its shape by itself and is not subject to substantial, permanent deformations following compression. Hereby a simple and durable construction is accomplished.

According to a further embodiment of the holder, the resilient material is arranged in a cavity of the profile secured by means of recesses in the sides of the profile. Hereby a construction is provided where the resilient material is retained in a simple and efficient manner.

The present invention further relates to a load carrier with shelves mounted on pillars, which pillar comprises one or more slots in which the individual shelves can be mounted by means of a holder with a carrier face for the reduction of noise from shelves. This is accomplished by means of a pillar as set forth above which is characterized in that the pillar further comprises resilient elements arranged in connection with the slots to the effect that the carrier face of the holder has bearing on the resilient element when the shelf is not loaded with goods; and that the resilient element is compressed in such a way that the carrier face of the holder comes into contact with the pillar when goods are loaded onto the shelf. Hereby a construction is accomplished for the reduction of noise from shelves, wherein those already in existence can be used.

According to a further embodiment, the carrier face does not come into contact with the pillar until a load of goods is loaded onto the shelf corresponding to half the shelf's own weight or more.

Those and other properties and advantages that characterize embodiments of the invention are set forth in particular in the figures, the specification and the claims 5 - 7, 9, 11, 11, and 13.

### Brief description of the drawing

Now follows a description of embodiments of the invention with reference to the accompanying figures. It is emphasized that the shown embodiments are examples, and that the invention is not limited thereto.
Figure 1 is a section of a shelf profile showing a shelf hook capable of entering into engagement with a notch in a pillar.
Figure 2 shows the shelf hook from figure 1 from direction AA'.
Figure 3 is a schematic view showing a load carrier seen from the side with vertical pillars on which shelves are mounted.
Figure 4 shows a shelf profile, seen from the side.
Figure 5 is a schematic view showing an embodiment of the invention wherein the resilient material is arranged in connection with the pillar.

### Detailed description

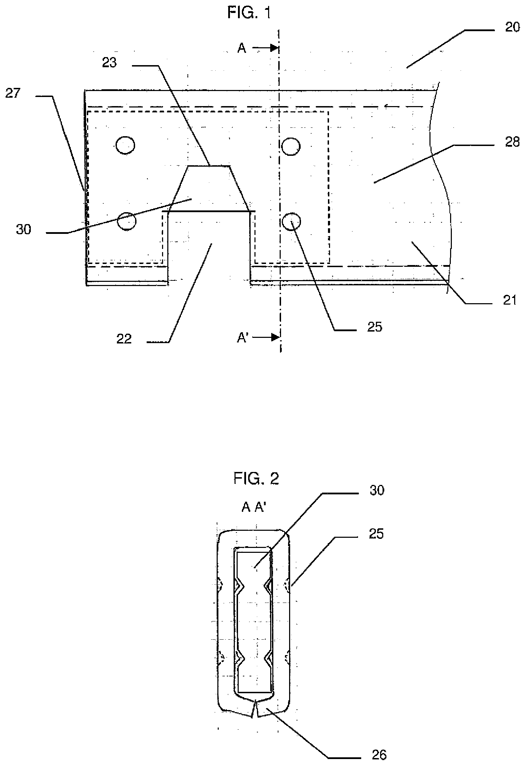

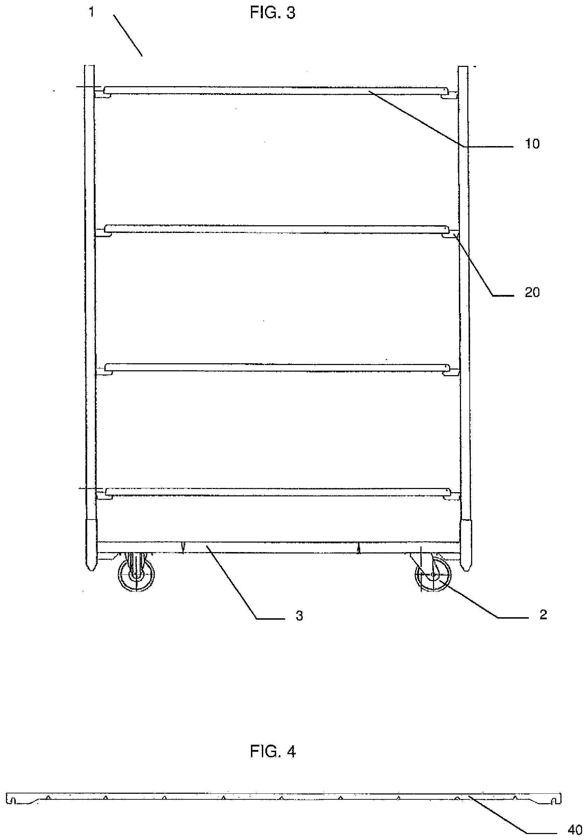

With starting point in the shown figures, in particular figure 1, a shelf hook 20 is shown which is in accordance with an embodiment of the invention for mounting of shelves on eg a load carrier as shown in figure 3. The shelf hook comprises a profile 21 in which a notch 22 is arranged at a suitable distance from the end 27 of the profile. In the shown embodiment, the flanges 26 of the profile are closed, and the profile 21 is configured such that it has a hollow interior. Within the profile 21, a resilient material 30 is arranged such that it is retained in place while simultaneously it is deformable. The resilient material 30 could be retained eg by means of recesses 25 in the front and the rear side of the profile by the resilient material having a larger dimension than the interior of the profile or by some kind of adhesive, but it is not limited thereto.

The resilient material is configured with a notch having essentially the same width as the notch 22 in the profile. When the resilient material 30 is arranged within the profile as shown in figures 1 and 2, the notch in the resilient material 30 and the notch 22 in the profile overlap in such a manner that the resilient material 30 fills a part of the notch 22. The notch in the resilient material 30 is smaller than the notch 22 in the profile 21, which causes the resilient material 30 to block/fill a part of the notch 22. The resilient material is hard-wearing, does not sustain substantial, permanent deformations, and it has good resistance to UV-light. For instance, it could be some kind of rubber or cellular rubber, but it is not limited thereto.

In case a shelf hook 20 is used for mounting shelves on a load carrier 1, a shelf hook is usually used at each of the four corners of the shelf. That can be done eg by integrating the shelf hook 20 in a corner profile 40 as shown in figure 4. A shelf constructed in accordance with that principle is made by using two shelf profiles 40, between which a shelf element of eg plastics or veneer is arranged. However, the invention is not in any way restricted to this; and many ways of constructing a shelf will be available to the person skilled in the art, which is why it is not described in detail herein.

To mount a shelf by means of shelf hooks 20 in accordance with an embodiment of the invention, each of the shelf hooks is arranged in each its slot in the pillars of the load carrier. When a shelf hook 20 is arranged in a slot, the notch 22 of the shelf hook engages with the edge of the pillar. The configuration of the shelf hook ensures that the shelf hook 20 does not slide out of the slot of the pillar and that the shelf is kept in place. When an unloaded shelf 10 is mounted to the pillars of a load carrier 1, the shelf 10 rests on the resilient material 30 of the shelf hook.

When a shelf 10 is not loaded with goods, it is exclusively the own weight of the shelf that imposes a load on the resilient material 30. When that is the case, only limited deformation will take place, and thus the shelf rests in its unloaded state on the resilient material 30. When the shelf 10 is not loaded with goods, there is consequently no connection between the pillar and the carrier face 23 of the shelf hook, which may contribute to reducing the transmission of vibrations and hence the formation of noise.

If the shelf is subsequently loaded with goods, the weight will increase considerably, and a further load will be imposed on the resilient material 30. This means that the resilient material 30 will become further compressed and that it no longer fills or blocks a part of the notch 22 of the profile. Hereby a direct contact is created between the carrier face 23 of the notch and the pillar. When the shelf is loaded with goods, it will thus rest directly on the profile since the resilient material 30 is compressed. Embodiments of the invention may optionally be constructed such that a load of goods of 5, 10, 15 or 20 kilos is required to create a direct contact between the carrier face 25 of the notch and the pillar. When the load of goods is removed from the shelf again, the load imposed on the resilient material 30 is reduced, which means that the resilient material 30 will once again resume its original shape. Hereby the direct connection between the carrier face 23 and the pillar is broken, and thus the shelf rests again on the resilient material 30. Vibrations from the load carrier will thus be absorbed by the resilient material 30, which may contribute to the reduction of noise.

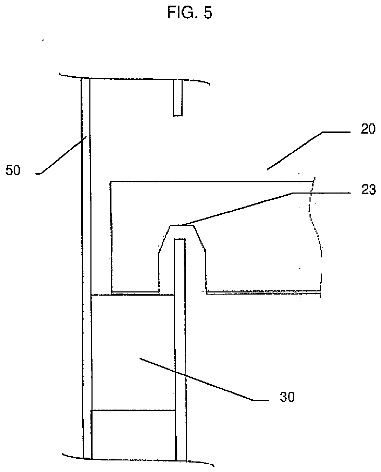

Embodiments of the invention may be configured in many other ways than the ones described above. The resilient material could be arranged eg as a layer on the outside of a shelf hook which is compressed when the shelf is loaded. Another way could be to position the resilient material 30 in connection with the slots in a pillar 50 as shown in figure 5. In that context, the resilient material could be arranged such that the shelf hooks rest on the resilient material only when the shelf is not loaded with goods. In this way a noise reducing effect is accomplished with existing shelves.

## Claims

1. A load carrier (1) with shelves (10) mounted on pillars (50) and a holder for the reduction of noise from a shelf (10) mounted on the pillars of the load carrier by means of holders, which holder is introduced into complementary slots in the pillars and is configured with a notch having a carrier face by which the holder is able to engage with the slot in such a manner that the holder has bearing on the pillar, **characterized in that** the holder comprises a resilient element (30) arranged in the notch to the effect that:
- the resilient element (30) causes the carrier face (23) to not enter into contact with the pillar (50) when the shelf is not loaded with goods; and that
- the resilient element (30) is compressed when a load of goods is loaded onto the shelf (10) and hereby a direct contact is created between the carrier face (23) of the notch and the pillar.

2. A load carrier according to claim 1, wherein the resilient element is a resilient element which is deformed when a load of goods is loaded onto the shelf.

3. A load carrier according to claim 2, wherein the resilient material is a material that resumes its shape by itself and is not subject to substantial, permanent deformations following compression.

4. A load carrier according to one of claims 2 - 3, wherein the resilient material which is arranged in the cavity of the profile is retained by means of recesses in the sides of the profiles.

5. A load carrier according to one of claims 2 - 4, wherein the resilient material is welded to the holder.

6. A load carrier according to one of claims 2 - 5, wherein the resilient material is some kind of rubber.

7. A load carrier according to one of claims 2 - 6, wherein the resilient material has good resistance to UV-light.

8. A load carrier according to any one of the preceding claims, wherein the carrier face does not come into contact with the pillar until a load of goods is loaded onto the shelf corresponding to half the own weight of the shelf or more.

9. A load carrier according to one of the preceding claims, wherein the load carrier is a trolley.

10. A load carrier (1) with shelves (10) mounted on pillars (50), which pillar comprises one or more slots in which the individual shelves can be mounted by means of a holder with a carrier face (23), **characterized in that** the pillar further comprises resilient elements (30) arranged in connection with the slots to the effect that:
- the holder has bearing on the resilient element when the shelf is not loaded with goods; and that
- the resilient element is compressed in such a manner that the carrier face of the holder comes into contact with the pillar when a load of goods is loaded onto the shelf.

11. A load carrier according to claim 10 wherein the resilient material is a material that resumes its shape by itself and is not subject to substantial, permanent deformations following compression

12. A load carrier according to one of the claims 10-11, wherein the carrier face does not come into contact with the pillar until a load of goods is loaded onto the shelf corresponding to half the own weight of the shelf or more.

13. A load carrier according to one of the preceding claims, wherein the load carrier is a trolley.

## Patentansprüche

1. Ladungsträger (1) mit Regalen (10), die auf Pfeilern (50) montiert sind, und einer Halterung zur Verringerung von Geräuschen von einem Regal (10), das mithilfe von Halterungen auf die Pfeiler des Ladungsträgers montiert ist, wobei die Halterung in komplementäre Schlitze in den Pfeilern eingeführt wird und mit einer Aussparung konfiguriert ist, die über eine Trägerfläche verfügt, mit deren Hilfe die Halterung dahingehend in den Schlitz fassen kann, dass die Halterung auf dem Pfeiler auflastet, **gekennzeichnet dadurch, dass** die Halterung ein elastisches Element (30) umfasst, das in der Aussparung angeordnet ist, mit der Wirkung, dass:
- das elastische Element (30) bewirkt, dass die Trägerfläche (23) den Pfeiler (50) nicht berührt, wenn das Regal nicht mit Waren bestückt ist; und dass
- das elastische Material (30) komprimiert wird, wenn eine Ladung Waren auf das Regal (10) geladen ist, und somit ein direkter Kontakt zwischen der Trägerfläche (23) der Aussparung und dem Pfeiler hergestellt wird.

2. Ladungsträger nach Anspruch 1, wobei das elastische Element ein elastisches Element ist, welches deformiert wird, wenn eine Ladung Waren auf das Regal geladen ist.

3. Ladungsträger nach Anspruch 2, wobei das elastische Material ein Material ist, welches selbsttätig wieder in seine Form zurückkehrt, und nach einer Kompression nicht wesentlich dauerhaft deformiert bleibt.

4. Ladungsträger nach einem der Ansprüche 2 bis 3, wobei das elastische Material, das in der Kavität des Profils angeordnet ist, mithilfe von Aussparungen an den Profilseiten gehalten wird.

5. Ladungsträger nach einem der Ansprüche 2 bis 4, wobei das elastische Material mit der Halterung verschweißt ist.

6. Ladungsträger nach einem der Ansprüche 2 bis 5, wobei das elastische Material eine Art Gummi ist.

7. Ladungsträger nach einem der Ansprüche 2 bis 6, wobei das elastische Material eine gute UV-Lichtbeständigkeit aufweist.

8. Ladungsträger nacheinem der vorstehenden Ansprüche, wobei die Trägerfläche erst mit dem Pfeiler in Berührung kommt, wenn eine Ladung Waren, deren Gewicht der Hälfte des Eigengewichts des Regals oder mehr entspricht, auf das Regal geladen ist.

9. Ladungsträger nach einem der vorstehenden Ansprüche, wobei es sich bei dem Ladungsträger um einen Einkaufswagen handelt.

10. Ladungsträger (1) mit Regalen (10), die an Pfeilern (50) montiert sind, wobei ein Pfeiler einen oder mehrere Schlitze umfasst, wobei die einzelnen Regale mithilfe einer Halterung montiert werden können und über eine Trägerfläche (23) verfügen, **dadurch gekennzeichnet, dass** der Pfeiler des Weiteren elastische Elemente (30) umfasst, die in Verbindung mit den Schlitzen angeordnet sind, mit der Wirkung, dass:
- die Halterung auf dem elastischen Element lastet, wenn das Regal nicht mit Waren bestückt ist; und dass
- das elastische Element so komprimiert wird, dass die Trägerfläche der Halterung den Pfeiler berührt, wenn eine Ladung Waren auf das Regal geladen ist.

11. Ladungsträger nach Anspruch 10, wobei das elastische Material ein Material ist, welches selbsttätig wieder in seine Form zurückkehrt, und nach einer Kompression nicht wesentlich dauerhaft deformiert bleibt.

12. Ladungsträger nach einem der Ansprüche 10 bis 11, wobei die Trägerfläche erst mit dem Pfeiler in Berührung kommt, wenn eine Ladung Waren, deren Gewicht der Hälfte des Regalgewichts oder mehr entspricht, auf das Regal geladen ist.

13. Ladungsträger nach einem der vorstehenden Ansprüche, wobei es sich bei dem Ladungsträger um einen Einkaufswagen handelt.

## Revendications

1. Porte-charge (1) muni d'étagères (10) montées sur des montants (50) et d'un support destiné à la réduction du bruit provenant d'une étagère (10) montée sur les montants du porte-charge au moyen de supports, lequel support est introduit dans des encoches complémentaires dans les montants et est conçu avec une encoche comportant une face portante au moyen de laquelle le support peut s'engager dans l'encoche de façon à ce que le support s'appuie sur le montant, **caractérisé en ce que** le support comprend un élément élastique (30) disposé dans l'encoche afin que :
- l'élément élastique (30) empêche la face portante (23) d'entrer en contact avec le montant (50) lorsque l'étagère n'est pas chargée de marchandises ; et afin que
- l'élément élastique (30) se comprime lorsqu'une charge de marchandises est placée sur l'étagère (10) et de ce fait, un contact direct se crée entre la face portante (23) de l'encoche et le montant.

2. Porte-charge selon la revendication 1, dans lequel l'élément élastique est un élément élastique qui est déformé lorsqu'une charge de marchandises est placée sur l'étagère.

3. Porte-charge selon la revendication 2, dans lequel le matériau élastique est un matériau qui reprend sa forme de lui-même et ne présente pas de déformations permanentes importantes après compression.

4. Porte-charge selon l'une quelconque des revendications 2 à 3, dans lequel le matériau élastique qui est disposé dans la cavité du profilé est retenu au moyen d'évidements dans les côtés des profilés.

5. Porte-charge selon l'une quelconque des revendications 2 à 4, dans lequel le matériau élastique est soudé sur le support.

6. Porte-charge selon l'une quelconque des revendications 2 à 5, dans lequel le matériau élastique est un type de caoutchouc.

7. Porte-charge selon l'une quelconque des revendications 2 à 6, dans lequel le matériau élastique a une bonne résistance à la lumière ultraviolette.

8. Porte-charge selon l'une quelconque des revendications précédentes, dans lequel la face portante ne vient en contact avec le montant que lorsque l'on place sur l'étagère une charge de marchandises d'un poids égal ou supérieur à la moitié du poids propre de l'étagère.

9. Porte-charge selon l'une quelconque des revendications précédentes, dans lequel le porte-charge est un chariot.

10. Porte-charge (1) muni d'étagères (10) montées sur des montants (50), lequel montant comprend une ou plusieurs encoches dans lesquelles les étagères individuelles peuvent être montées au moyen d'un support comportant une face portante (23), **caractérisé en ce que** le montant comprend en outre des éléments élastiques (30) disposés en liaison avec les encoches afin que :
- le support repose sur l'élément élastique lorsque l'étagère n'est pas chargée de marchandises ; et afin que
- l'élément élastique se comprime de telle sorte que la face portante du support entre en contact avec le montant lorsqu'une charge de marchandises est placée sur l'étagère.

11. Porte-charge selon la revendication 10, dans lequel le matériau élastique est un matériau qui reprend sa forme de lui-même et ne présente pas de déformations permanentes importantes après compression.

12. Porte-charge selon l'une quelconque des revendications 10 à 11, dans lequel la face portante ne vient en contact avec le montant que lorsque l'on place sur l'étagère une charge de marchandises d'un poids égal ou supérieur à la moitié du poids propre de l'étagère.

13. Porte-charge selon l'une quelconque des revendications précédentes, dans lequel le porte-charge est un chariot.
